# EUROPÄISCHE PATENTSCHRIFT

(11) **EP 1 935 198 B1**
(45) Veröffentlichungstag und Bekanntmachung des Hinweises auf die Patenterteilung: **02.01.2019**
(21) Anmeldenummer: 06792985.1
(22) Anmeldetag: 24.08.2006
(51) Int. Cl.: H04L 12/24, H04W 24/00

(54) **FREISCHALTUNG VON HARDWARE IN EINEM MANAGEMENTSYSTEM**
ACTIVATION OF HARDWARE IN A MANAGEMENT SYSTEM
ACTIVATION DU MATÉRIEL DANS UN SYSTÈME DE MANAGEMENT

(30) Priorität: 06.10.2005 EP 05021807
(43) Veröffentlichungstag der Anmeldung: 25.06.2008
(73) Patentinhaber: Nokia Solutions and Networks GmbH & Co. KG, 81541 Munich (DE)
(72) Erfinder: HERING, Gerhard, 85716 Unterschleissheim (DE); OTTO, Detlev, 81479 München (DE); SCHAUPP, Bernhard, 81243 München (DE)
(74) Vertreter: Nokia EPO representatives
(86) Internationale Anmeldenummer: PCT/EP2006/065645
(87) Internationale Veröffentlichungsnummer: WO 2007/039354

(56) Entgegenhaltungen:
- EP-A- 1 365 608
- "FLEXlm END USERS GUIDE" 2. Juni 2001 (2001-06-02), , XP002247903 das ganze Dokument

## Beschreibung

Die Erfindung betrifft ein Verfahren zum Betreiben eines zumindest einen Manager und einen Agenten umfassenden Managementsystems.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagements (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

In Bezug auf Mobilfunkkommunikationssysteme existieren Managementschnittstellen beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards. Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten UMTS oder einem anderen Mobilfunk- oder Telekommunikationsnetz dar.

Es ist möglich, dass in einem Managementsystem Einrichtungen vorhanden sind, welche über nicht freigeschaltete Hardware verfügen. Dies bedeutet, dass die betreffenden Einrichtungen das Leistungspotential dieser Hardware nicht benutzen können, bevor eine Freischaltung erfolgt. Eine derartige Situation tritt z.B. dann auf, wenn der Hersteller der jeweiligen Einrichtung diese mit Hardware ausgestattet hat, welche der Abnehmer der Einrichtung zu diesem Zeitpunkt nicht benötigt bzw. nicht zu bezahlen bereit ist. Eine Freischaltung erfolgt üblicherweise, indem eine zur Freischaltung berechtigte Person am Ort der jeweiligen Einrichtung den Betrieb der Einrichtung unterbricht und die erforderlichen Maßnahmen zur Freischaltung durchführt. Einschlägiger Stand der Technik kann dazu beispielsweise in der EP 1 365 608 A1 aufgefunden werden, welche eine Verfahren zum Managen von verschiedenen Konfigurationen in Telekommunikationseinrichtungen offenbart.

Der Erfindung liegt die Aufgabe zugrunde, ein effizientes Verfahren zum Betreiben eines Managementsystems aufzuzeigen, welches eine Freischaltung von Hardwareeinheiten eines Agenten ermöglichen soll. Des Weiteren sollen ein Manager und ein Computerprogrammprodukt zur Durchführung des Verfahrens vorgestellt werden.

Diese Aufgabe wird durch ein Verfahren mit den Merkmalen des Anspruchs 1, sowie durch Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines zumindest einen Manager und einen Agenten umfassenden Managementsystems stehen dem Manager Informationen zur Verfügung. Diese Informationen umfassen eine Mehrzahl von Freischaltungsinformationen. Es erfolgt eine Speicherung der Freischaltungsinformationen in einem Speicher des Managers. Zumindest eine der Freischaltungsinformationen wird von dem Manager an den Agenten gesendet, woraufhin diese im Agenten die Freischaltung von zumindest einer Hardwareeinheit bewirkt. Weiterhin erfolgt eine Löschung oder Markierung der zumindest einen der Freischaltungsinformationen in dem Speicher des Managers.

Die Erfindung kann in verschiedenartigen Managementsystemen eingesetzt werden, wobei jeweils der Manager eine übergeordnete Funktion gegenüber dem Agenten einnimmt. Dem Manager stehen Informationen zur Verfügung, welche eine Mehrzahl von Freischaltungsinformationen umfassen. Dies bedeutet, dass eine mindestens zwei Bestandteile aufweisende Gruppe von Freischaltungsinformationen existiert, welche dem Manager gleichzeitig zur Verfügung stehen. Die mehreren Freischaltungsinformationen können dem Manager z.B. in einer gemeinsamen Nachricht oder auf einem gemeinsamen Datenträger zur Verfügung gestellt werden. Der Manager speichert die Freischaltungsinformationen, wobei die Speicherung in einem Speicher des Managers oder zumindest in einem Speicher, auf welchen der Manager zugreifen kann, erfolgt.

Jede Freischaltungsinformation vermag eine Freischaltung einer Hardwareeinheit eines Agenten zu bewirken. Da dem Manager mehrere Freischaltungsinformationen zur Verfügung stehen, bedeutet dies, dass unter Verwendung dieser Freischaltungsinformationen eine Mehrzahl von Hardwareeinheiten freischaltbar sind. Weist ein Agent eine nicht freigeschaltete Hardwareeinheit auf, so ist diese Hardwareeinheit zwar bei/in dem Agenten angelegt, kann von diesem jedoch nicht zu ihrem bestimmungsgemäßen Gebrauch eingesetzt werden. Es bedarf einer Freischaltung, welche bewirkt, dass die bei/in dem Agenten angelegte Hardwareeinheit nunmehr bestimmungsgemäß gebraucht werden kann.

Die Freischaltung einer Hardwareeinheit erfolgt, nachdem der Agent eine Freischaltungsinformation von dem Manager empfangen hat. Hierbei ist eine Versendung einer einzelnen Freischaltungsinformation oder einer Mehrzahl von Freischaltungsinformationen von dem Manager an den Agenten möglich, und entsprechend die darauf folgende Freischaltung von einer oder von mehreren Hardwareeinheiten. Die Freischaltung verläuft hierbei vorzugsweise automatisch, d.h. ohne dass es der Mitwirkung von Personal am Ort des Agenten bzw. von Personal, welches auf den Agenten einwirkt, bedarf.

Die zumindest eine Freischaltungsinformation, welche die Freischaltung von zumindest einer Hardwareeinheit bewirkt, wird gelöscht oder markiert. Dies bedeutet, dass die zumindest eine Freischaltungsinformation, welche von dem Manager zur Freischaltung einer agentenseitigen Hardwareeinheit eingesetzt wird, nicht unverändert im Speicher des Managers verbleibt.

In Weiterbildung der Erfindung stehen die Informationen dem Manager verschlüsselt zur Verfügung und werden von dem Manager vor der Speicherung entschlüsselt, wobei zur Entschlüsselung eine den Manager eindeutig identifizierbare von dem Manager nicht modifizierbare Größe abgefragt wird. Die Tatsache, dass eine zur Entschlüsselung benötigte Größe von dem Manager nicht modifizierbar ist, wirkt sich aufgrund dessen, dass die Größe den Manager eindeutig kennzeichnet derart aus, dass die Informationen von einer anderen Managementeinrichtung des Managementsystems nicht entschlüsselbar sind. Denn der Versuch einer anderen Managementeinrichtung, die Informationen zu entschlüsseln, würde dazu führen, dass eine die andere Managementeinrichtung eindeutig identifizierende Größe zur Entschlüsselung verwendet würde, welche jedoch keine erfolgreiche Entschlüsselung bewirken kann.

Vorteilhaft ist es, wenn die Löschung oder Markierung automatisch erfolgt, und zwar entweder nach dem managerseitigen Empfang einer von dem Agenten stammenden Nachricht betreffend die erfolgte Freischaltung, oder nach der Versendung der zumindest einen der Freischaltungsinformationen durch den Manager. Dass die Löschung oder Markierung automatisch erfolgt bedeutet, dass sobald die jeweilige der beiden o.g. Bedingungen eingetreten ist, die Löschung oder Markierung nicht mehr vermieden werden kann.

In Ausgestaltung der Erfindung verliert die zumindest eine der Freischaltungsinformationen aufgrund der Löschung und/oder Markierung die Fähigkeit, eine Freischaltung von zumindest einer Hardwareeinheit bewirken zu können. Eine Freischaltungsinformation ist somit nicht mehrfach zur Freischaltung einer Hardwareeinheit einsetzbar. Dies kann z.B. umgesetzt werden, indem eine gelöschte oder markierte Freischaltungsinformation von dem Agenten als unzulässig verworfen wird und hierdurch die Freischaltung verhindert wird.

Einer bevorzugten Weiterbildung der Erfindung gemäß umfassen die Informationen Freischaltungsinformationen für verschiedene Arten von Hardwareeinheiten. Dem Manager liegen somit zumindest eine Freischaltungsinformation für eine erste Art von Hardwareeinheit und zumindest eine zweite Freischaltungsinformation für eine zweite Art von Hardwareeinheit zur Verfügung. Bei den verschiedenen Arten von Hardwareeinheiten kann es sich um Hardwareeinheiten eines oder mehrerer Agenten handeln.

Vorzugsweise erfolgt die Speicherung der Freischaltungsinformationen derart, dass die Freischaltungsinformationen von dem Manager weder kopierbar noch modifizierbar sind. Dies bedeutet, dass der Manager nicht in der Lage ist, Freischaltungsinformationen zu vervielfältigen oder eine Abänderung der Freischaltungsinformationen vorzunehmen. Hierdurch können die Freischaltungsinformationen effizient gegen Missbrauch geschützt werden.

In Ausgestaltung der Erfindung empfängt der Manager vor der Versendung der zumindest einen der Freischaltungsinformationen Informationen betreffend zumindest eine freischaltbare Hardwareeinheit des Agenten. Bei den von dem Manager empfangenen Informationen kann es sich z.B. um eine Anzahl bereits freigeschalteter Hardwareeinheiten, evtl. bezogen auf eine bestimmte Art von Hardwareeinheiten, handeln, oder um eine Anzahl noch nicht freigeschalteter Hardwareeinheiten, evtl. bezogen auf eine bestimmte Art von Hardwareeinheiten.

In Weiterbildung der Erfindung wird zumindest eine weitere der Freischaltungsinformationen von dem Manager an einen weiteren Agenten gesendet, woraufhin die zumindest eine weitere der Freischaltungsinformationen im weiteren Agenten die Freischaltung von zumindest einer Hardwareeinheit bewirkt. In diesem Fall werden von dem Manager verschiedene Freischaltungsinformationen an verschiedene Agenten gesendet. Erfindungsgemäß kann jede Freischaltungsinformation zur Freischaltung einer Hardwareeinheit eines jeden Agenten verwendet werden , evtl. unter der Voraussetzung, dass der jeweilige Agent eine den Freischaltungsinformationen entsprechende Art von Hardwareeinheit aufweist. In diesem Fall sind die Freischaltungsinformationen nicht agentenspezifisch.

Es ist möglich, dass die zumindest eine der Freischaltungsinformationen im Agenten eine zeitweilige Freischaltung von zumindest einer Hardwareeinheit bewirkt. Dies bedeutet, dass die jeweilige Hardwareeinheit von dem Agenten für eine bestimmte Zeitspanne oder bis zu einem bestimmten Zeitpunkt verwendet werden kann. Danach erfolgt eine automatische Beendigung der Freischaltung.

Der erfindungsgemäße Manager für ein zumindest den Manager und einen Agenten umfassendes Managementsystem und das erfindungsgemäße Computerprogrammprodukt für ein zumindest einen Manager und einen Agenten umfassendes Managementsystem sind durch jeweilige Patentansprüche definiert.

Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Der erfindungsgemäße Manager und das erfindungsgemäße Computerprogrammprodukt eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel aufweisen.

Im folgenden wird die Erfindung anhand eines Ausführungsbeispiels näher erläutert. Dabei zeigen:
- Figur 1:: einen Ausschnitt aus einem Managementsystem,
- Figur 2:: ein Ablaufdiagramm zum erfindungsgemäßen Verfahren.

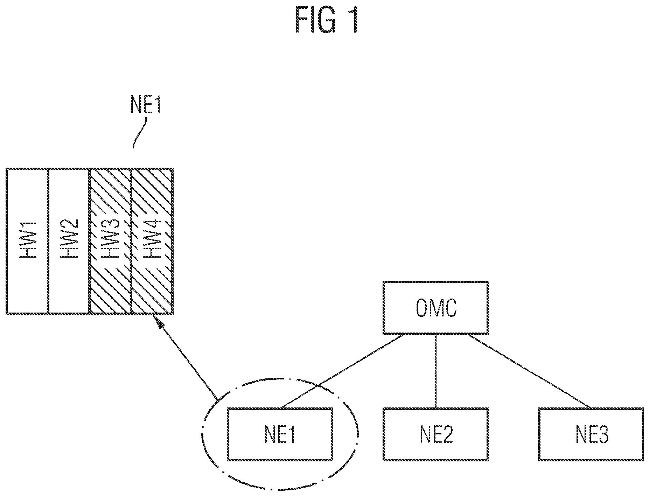

Der in Figur 1 dargestellte Ausschnitt aus einem Managementsystem eines Funkkommunikationssystems umfasst das Betriebs- und Wartungszentrum OMC, sowie die Netzelemente NE1, NE2 und NE3. Bei den Netzelementen NE1, NE2 und NE3 kann es sich z.B. um Basisstationen handeln. Wie beispielhaft anhand des Netzelementes NE1 dargstellt, weisen die Netzelemente eine Mehrzahl von Hardwaremodulen oder -einheiten auf. Beispielhaft wird davon ausgegangen, dass das Netzelement NE1 die vier Hardwaremodule HW1, HW2, HW3 und HW4 aufweist.

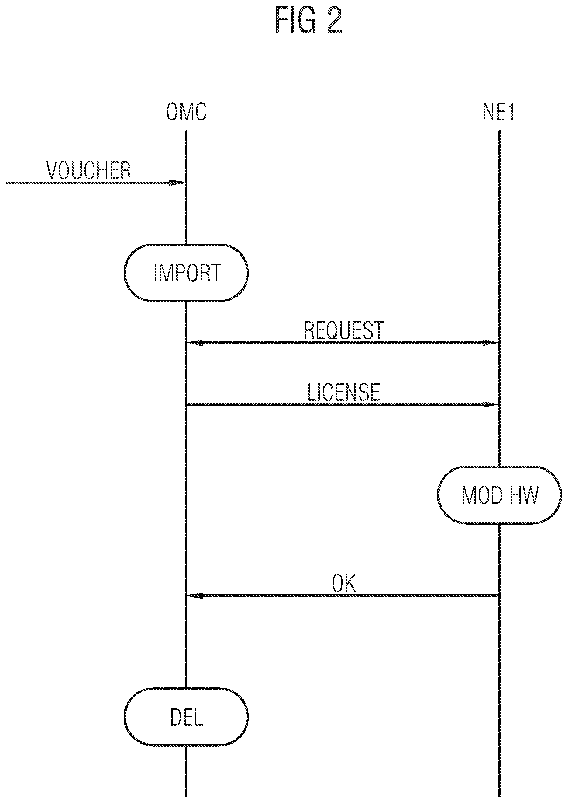

Obwohl das Netzelement NE1 die vier Hardwaremodule HW1, HW2, HW3 und HW4 aufweist, kann es nicht jedes der Hardwaremodule HW1, HW2, HW3 und HW4 verwenden. Aktuell sind von dem Netzelement NE1 lediglich die beiden Hardwaremodule HW1 und HW2 verwendbar. Um auch die beiden gestrichelt dargestellten Hardwaremodule HW3 und HW4 verwenden zu können, muss eine Freischaltung dieser Module erfolgen. Bei den Hardwaremodulen HW1, HW2, HW3 und HW4 kann es sich z.B. um Channel Elemente von sogenannte Channel Cards handeln, und/oder Zellen eines DRIC (Digital Receiver). Der Ablauf eines Verfahrens, welches zur Freischaltung eines oder beider der Hardwaremodule HW3 und HW4 führt, ist in Figur 2 dargestellt.

Dem Betriebs- und Wartungszentrum OMC werden von dem Hersteller des Betriebs- und Wartungszentrums OMC und der Netzelemente NE1, NE2 und NE3 ein Datenträger, z.B. in Form einer CD-ROM, mit Informationen VOUCHER zur Verfügung gestellt. Dieses Zur-Verfügung-Stellen erfolgt, nachdem das Betriebs- und Wartungszentrum OMC oder der Betreiber des Netzwerkmanagementsystems Lizenzen zum Freischalten von Hardwaremodulen angefordert hat. Die Informationen VOUCHER beinhalten eine Mehrzahl solcher Lizenzen. Verschiedene der Lizenzen können für verschiedene Arten von Hardwaremodulen geeignet sein. Jede der Lizenzen ist zwar spezifisch für eine bestimmte Art von Hardwaremodul, jedoch nicht spezifisch für ein bestimmtes Netzelement. Dies bedeutet, dass jede Lizenz des Datenträgers VOUCHER von dem Betriebs- und Wartungszentrum OMC für jedes der von ihm überwachten Netzelemente NE1, NE2 und NE3 verwendet werden kann, sofern das jeweilige Netzelement ein freizuschaltbares Hardwaremodul der jeweiligen Art aufweist. Der Betreiber muss somit zum Zeitpunkt des Erwerbs der Lizenzen nicht entscheiden, für welche Netzelemente die Lizenzen eingesetzt werden sollen, wodurch er flexibel auf Engpässe während dem Betrieb des Funkkommunikationssystems reagieren kann.

Die auf dem Datenträger enthaltenen Informationen VOUCHER sind verschlüsselt. In dem Verfahrensschritt IMPORT entschlüsselt das Betriebs- und Wartungszentrum OMC die Daten und speichert diese. Zur Ver- bzw. Entschlüsselung wird eine für das Betriebs- und Wartungszentrum OMC spezifische Größe, wie z.B. die MAC-Adresse des Betriebs- und Wartungszentrums OMC, verwendet. Hierbei handelt es sich um eine bei Herstellung des Betriebs- und Wartungszentrums OMC dem Betriebs- und Wartungszentrum OMC "eingebrannte" Größe, welche nicht veränderbar ist. Hierdurch wird sichergestellt, dass die Informationen VOUCHER ausschließlich durch das Betriebs- und Wartungszentrum OMC, für welches sie bestimmt sind und erstellt wurden, entschlüsselt werden können.

Die einzelnen Lizenzen, aus welchen sich die Informationen VOUCHER zusammensetzen, liegen nach der Entschlüsselung im Klartext, d.h. unverschlüsselt vor. Sie sind jedoch durch eine digitale Signatur oder eine andere Prüfsumme vor Manipulation geschützt. Dies bedeutet, dass der Betreiber des Managementsystems die Lizenzen zwar lesen und verwenden, jedoch nicht verändern kann. Eine Manipulation einer Lizenz würde dazu führen, dass beim Versuch, die Lizenz zur Freischaltung eines Hardwaremoduls in einem Netzelement zu verwenden, das Netzelement diese als ungültig erkennen und verwerfen würde. Eine Freischaltung von Hardwaremodulen kann somit nur durch Lizenzen erfolgen, welche in den Informationen VOUCHER enthalten waren und nicht verändert wurden.

Die Speicherung der Informationen VOUCHER im Verfahrensschritt IMPORT erfolgt in Form einer Datei, welche von dem Betriebs- und Wartungszentrum OMC bzw. von dem Betreiber des Betriebs- und Wartungszentrums OMC zwar gelesen, jedoch nicht verändert werden kann. Auf diese Weise kann verhindert werden, dass der Betreiber den ursprünglich in den Daten des Datenträgers VOUCHER enthaltenen Lizenzen weitere hinzufügt. Durch die Lesbarkeit der Datei wird weiterhin sichergestellt, dass das Betriebs- und Wartungszentrum OMC bzw. der Betreiber des Betriebs- und Wartungszentrums OMC überprüfen kann, wie viele und gegebenenfalls auch welche Lizenzen ihm aktuell zur Verfügung stehen, d.h. noch nicht von ihm verbraucht wurden.

Weiterhin ist die von dem Betriebs- und Wartungszentrums OMC gespeicherte Datei, welche die Lizenzen enthält, nicht kopierbar. Jedoch ist es möglich, die Datei zu einem anderen Betriebs- und Wartungszentrum zu transferieren. Nachdem das Betriebs- und Wartungszentrums OMC die Informationen VOUCHER entschlüsselt hat, sind die Lizenzen nicht mehr nur für die von dem Betriebs- und Wartungszentrum OMC überwachten Netzelemente anwendbar. Da eine Vervielfältigung der die Lizenzen enthaltenden Datei jedoch nicht möglich ist, lässt sich die Anzahl der dem Betreiber des Managementsystems zur Verfügung stehenden Lizenzen auch bei einer Übertragung von Lizenzen von dem Betriebs- und Wartungszentrum OMC an andere Managementeinrichtungen nicht steigern.

Es erfolgt der Verfahrensschritt REQUEST der Kommunikation zwischen dem Betriebs- und Wartungszentrum OMC und dem Netzelement NE1. Dieser kann z.B. eine Anfrage des Betriebs- und Wartungszentrums OMC an das Netzelement NE1 nach der Anzahl der bereits freigeschalteten bzw. aktivierten Hardwaremodule beinhalten. Da dem Betriebs- und Wartungszentrum OMC bzw. dem Betreiber des Betriebs- und Wartungszentrums OMC bekannt, über wie viele Hardwaremodule das Netzelement NE1 verfügt, kann er über die Anfrage ermitteln, wie viele freischaltbare Hardwaremodule bei dem Netzelement NE1 vorliegen. Die Abfrage der Anzahl der bereits aktivierten Hardwaremodule kann alternativ auch durch ein LMT (Local Maintenance Terminal), welches vor Ort mit dem Netzelement NE1 verbunden wird, erfolgen.

Nach der Feststellung, dass bei dem Netzelement NE1 freischaltbare Hardwaremodule vorliegen, kann das Betriebs- und Wartungszentrum OMC bzw. der Betreiber des Betriebs- und Wartungszentrums OMC entscheiden, dass eine Freischaltung eines oder mehrerer Hardwaremodule des Netzelementes NE1 erfolgen soll. Alternativ ist es möglich, dass das Netzelement NE1 in dem Verfahrensschritt REQUEST die Freischaltung eines oder mehrerer weiterer Hardwaremodule fordert, woraufhin das Betriebs- und Wartungszentrum OMC bzw. der Betreiber des Betriebs- und Wartungszentrums OMC entscheidet, dass eine derartige Freischaltung erfolgen soll.

Im Anschluss sendet das Betriebs- und Wartungszentrum OMC im Verfahrensschritt LICENSE eine der Lizenzen an das Netzelement NE1. Das Netzelement NE1 erkennt, dass es sich bei der empfangenen Nachricht um eine Lizenz zur Freischaltung einer bestimmten Art von Hardwaremodul handelt. Die empfangene Lizenz wird eingelesen, wobei vorzugsweise ein EEPROM (Electrically Erasable Programmable ROM), ein mehrfach beschreibbarer und löschbarer Speicherbaustein, dessen gespeicherte Daten auch nach der Unterbrechung der Stromversorgung erhalten bleiben, des freizuschaltenden Hardwaremoduls verwendet wird, woraufhin in dem Verfahrensschritt MOD HW automatisch die Freischaltung des Hardwaremoduls erfolgt. Nach erfolgter Freischaltung eines Hardwaremoduls kann das Netzelement NE1 einem anderen Betriebs- und Wartungszentrum OMC des Managementsystems zugewiesen werden, ohne dass sich an dem freigeschalteten Zustand des Hardwaremoduls etwas ändert. Das freigeschaltete Hardwaremodul kann auch zu einem anderen Netzelement transportiert werden und nimmt dabei seine freigeschaltete Funktionalität mit.

Anstelle der Versendung einzelner Lizenzen von dem Betriebs- und Wartungszentrum OMC an das Netzelement NE1 ist auch eine Übertragung einer Mehrzahl von Lizenzen möglich. Durch diesen Übertragung "en block" wird Zeit gespart. Eine Gruppierung von Lizenzen kann vor der Versendung unter Verwendung von script files erfolgen.

Nach erfolgreicher Aktivierung des oder der Hardwaremodule im Verfahrensschritt MOD HW sendet das Netzelement dem Betriebs- und Wartungszentrum OMC in dem Verfahrensschritt OK eine positive Bestätigungsnachricht. Nach Empfang der Bestätigungsnachricht durch das Betriebs- und Wartungszentrum OMC erfolgt in dem Verfahrensschritt DEL automatisch eine Löschung der verwendeten Lizenz/Lizenzen oder eine Markierung der verwendeten Lizenz/Lizenzen als verbraucht. Dass der Verfahrensschritt DEL automatisch abläuft, bedeutet, dass der Betreiber des Betriebs- und Wartungszentrums OMC die Durchführung dieses Schrittes nicht unterbinden kann. Eine als verbraucht markierte Lizenz kann nicht mehr zur Freischaltung von Hardwaremodulen verwendet werden. Sollte dies dennoch versucht werden, würde diese Lizenz im Netzelement als ungültig verworfen. Alternativ ist es möglich, dass das Netzelement nicht erkennt, ob eine Lizenz gültig ist oder nicht, sondern bei Empfang einer Lizenz eine Anfrage an das Betriebs- und Wartungszentrum OMC richtet, ob die empfangene Lizenz gültig ist. Die Lizenz kann nur dann eine Freischaltung eines Hardwaremoduls bewirken, wenn eine positive Antwort des Betriebs- und Wartungszentrums OMC empfangen wird, dass die jeweilige Lizenz gültig ist.

Empfängt das Netzelement NE1 Lizenzen für Hardwaremodule, welches es nicht aufweist, oder welche bereits alle freigeschaltet sind, so informiert das Netzelement NE1 das Betriebs- und Wartungszentrum OMC darüber, dass die Lizenzen oder zumindest ein Teil der Lizenzen nicht verwendet wurden. Aufgrund dieser Rückmeldung des Netzelementes NE1 erfolgt bei dem Betriebs- und Wartungszentrum OMC keine Löschung oder Markierung dieser Lizenz/Lizenzen als verbraucht.

Vorzugsweise existiert in dem Betriebs- und Wartungszentrum OMC zumindest eine Kopie der Datei, welche die Lizenzen enthält. Hierdurch soll vermieden werden, dass die Datei bei einem Systemabsturz verloren geht. Denn in diesem Fall könnte der Betreiber des Betriebs- und Wartungszentrums OMC nicht nachweisen, wie viele unverbrauchte Lizenzen ihm noch zur Verfügung standen.

Das beschriebene Verfahren kann sowohl auf permanente als auch auf temporäre Lizenzen angewandt werden. Eine temporäre Lizenz ermöglicht eine Freischaltung lediglich für eine bestimmte Zeitspanne. Nach Ablauf der Zeitspanne wird das jeweilige Hardwaremodul automatisch wieder deaktiviert, so dass eine erneute Freischaltung nötig wäre, um das Hardwaremodul dauerhaft nutzen zu können. Hierdurch können dem System Leistungsmerkmale zum "Ausprobieren" zur Verfügung gestellt werden.

Das beschriebene Verfahren weist sowohl für den Hersteller der Netzelemente als auch für den Betreiber des Managementsystems Vorteile auf: der Hersteller der Netzelemente kann alle Netzelemente mit den gleichen Hardwaremodulen und somit mit der maximalen Anzahl an Hardwaremodulen ausstatten, auch wenn von dem Abnehmer aktuell ein solcher Umfang an Hardwareressourcen weder benötigt noch angefragt wird. Dieses einheitliche Vorgehen in Bezug auf alle Netzelemente wirkt sich vorteilhaft auf die Betriebs- und Anschaffungskosten für die Herstellung der Netzelemente aus. Der Betreiber des Managementsystems zahlt zu Beginn, d.h. beim Kauf des Netzelementes, lediglich für bestimmte Hardwaremodule, welche ihm somit ohne die erfindungsgemäße Freischaltung zur Verfügung stehen. Die Freischaltung weiterer Hardwaremodule kann bei Einsatz der Erfindung mit feiner Granularität erfolgen, nämlich für jedes Hardwaremodul einzeln. Hierdurch muss der Betreiber lediglich für diejenigen Hardwaremodule zahlen, welche er tatsächlich nutzen möchte.

Gemäß dem Stand der Technik ist es zur Freischaltung von Hardwaremodulen von Netzelementen nötig, dass am Ort des Netzelementes in das Betriebssystem des Netzelementes eingegriffen wird. Die Erfindung ermöglicht hingegen eine "Remote"-Freischaltung, ohne dass Personal vor Ort bei dem Netzelement hierfür eingesetzt werden muss. Dies spart Kosten und verringert den Zeitaufwand für die Freischaltung. Weiterhin ist es möglich, dass durch die "Remote"-Freischaltung der Zwang entfällt, dass Netzelement während dem Freischaltevorgang abzuschalten, so dass der normale Betrieb des Netzelementes nicht unterbrochen werden muss.

Nachdem das Betriebs- und Wartungszentrums OMC den Datenträger VOUCHER empfangen hat, ist bei der Freischaltung keine aus Sicht des Funkkommunikationssystems externe Einrichtung beteiligt. Hierdurch erfährt das Managementsystem keine Einbußen an Sicherheit.

## Patentansprüche

1. Verfahren zum Betreiben eines zumindest einen Manager (OMC) und mehrere Agenten (NE1, NE2, NE3) umfassenden Managementsystems, bei dem
dem Manager (OMC) von einer externen Einheit Informationen (VOUCHER) zur Verfügung gestellt werden, welche eine Mehrzahl von Freischaltungsinformationen umfassen,
eine Speicherung der Freischaltungsinformationen in einem Speicher des Managers (OMC) erfolgt,
zumindest eine der Freischaltungsinformationen von dem Manager (OMC) an einen der Agenten (NE1, NE2, NE3) gesendet wird, woraufhin die zumindest eine der Freischaltungsinformationen in dem einen der Agenten (NE1, NE2, NE3) die Freischaltung von zumindest einer Hardwareeinheit (HW1, HW2, HW3, HW4) bewirkt,
eine Löschung oder Markierung der zumindest einen der Freischaltungsinformationen in dem Speicher des Managers (OMC) erfolgt, **dadurch gekennzeichnet, dass**
jede der Freischaltinformationen zur Freischaltung einer bestimmten Art von Hardwareeinheit (HW1, HW2, HW3) in einem beliebigen der mehreren Agenten (NE1, NE2, NE3) verwendet werden kann.

2. Verfahren nach Anspruch 1, bei dem
die Informationen (VOUCHER) dem Manager (OMC) verschlüsselt zur Verfügung stehen und von dem Manager (OMC) vor der Speicherung entschlüsselt werden,
wobei zur Entschlüsselung eine den Manager (OMC) eindeutig identifizierende von dem Manager (OMC) nicht modifizierbare Größe abgefragt wird.

3. Verfahren nach Anspruch 1 oder 2, bei dem die Löschung oder Markierung automatisch erfolgt
• nach dem Empfang durch den Manager (OMC) einer von dem einen der Agenten (NE1, NE2, NE3) stammenden Nachricht betreffend die erfolgte Freischaltung,
oder
• nach der Versendung der zumindest einen der Freischaltungsinformationen durch den Manager (OMC).

4. Verfahren nach einem der Ansprüche 1 bis 3, bei dem aufgrund der Löschung oder Markierung die zumindest eine der Freischaltungsinformationen die Fähigkeit verliert, eine Freischaltung von zumindest einer Hardwareeinheit (HW1, HW2, HW3, HW4) bewirken zu können.

5. Verfahren nach einem der Ansprüche 1 bis 4, bei dem die Informationen (VOUCHER) Freischaltungsinformationen für verschiedene Arten von Hardwareeinheiten (HW1, HW2, HW3, HW4) umfassen.

6. Verfahren nach einem der Ansprüche 1 bis 5, bei dem die Speicherung der Freischaltungsinformationen derart erfolgt, dass die Freischaltungsinformationen von dem Manager (OMC) weder kopierbar noch modifizierbar sind.

7. Verfahren nach einem der Ansprüche 1 bis 6, bei dem der Manager (OMC) vor der Versendung der zumindest einen der Freischaltungsinformationen Informationen betreffend zumindest eine freischaltbare Hardwareeinheit (HW1, HW2, HW3, HW4) des einen der Agenten (NE1, NE2, NE3) empfängt.

8. Verfahren nach einem der Ansprüche 1 bis 7, bei dem zumindest eine weitere der Freischaltungsinformationen von dem Manager (OMC) an einen weiteren der Agenten (NE1, NE2, NE3) gesendet wird, woraufhin die zumindest eine weitere der Freischaltungsinformationen im weiteren der Agenten (NE1, NE2, NE3) die Freischaltung von zumindest einer Hardwareeinheit (HW1, HW2, HW3, HW4) bewirkt.

9. Verfahren nach einem der Ansprüche 1 bis 8, bei dem die zumindest eine der Freischaltungsinformationen im Agenten (NE1, NE2, NE3) eine zeitweilige Freischaltung von zumindest einer Hardwareeinheit (HW1, HW2, HW3, HW4) bewirkt.

10. Manager (OMC) für ein zumindest den Manager (OMC) und mehrere Agenten (NE1, NE2, NE3) umfassendes Managementsystem, mit
Mitteln zum Empfangen von Informationen (VOUCHER) von einer externen Einheit, welche Informationen (VOUCHER) eine Mehrzahl von Freischaltungsinformationen umfassen,
Mitteln zum Speichern der Mehrzahl von Freischaltungsinformationen in einem Speicher, wobei jede der Freischaltungsinformationen in einem beliebigen der Agenten (NE1, NE2, NE3) die Freischaltung von zumindest einer Hardwareeinheit (HW1, HW2, HW3, HW4) einer bestimmten Art von Hardwareeinheit bewirken kann,
Mitteln zum Versenden von zumindest einer der Freischaltungsinformationen an den einen der Agenten (NE1, NE2, NE3),
Mitteln zum Löschen oder Markieren der zumindest einen der Freischaltungsinformationen in dem Speicher.

11. Computerprogrammprodukt für ein zumindest einen Manager (OMC) und mehreren Agenten (NE1, NE2, NE3) umfassendes Managementsystem, mit
Mitteln zum Empfangen von Informationen (VOUCHER) von einer externen Einheit, welche Informationen (VOUCHER) eine Mehrzahl von Freischaltungsinformationen umfassen,
Mitteln zum Speichern der Mehrzahl von Freischaltungsinformationen in einem Speicher des Managers (OMC),
Mitteln zum Freischalten von zumindest einer Hardwareeinheit (HW1, HW2, HW3, HW4) einer bestimmten Art von Hardwareeinheit eines beliebigen der Agenten (NE1, NE2, NE3) nach Empfang von zumindest einer der Freischaltungsinformationen, die von dem Manager (OMC) gesendetet wird,
Mitteln zum Löschen oder Markieren der zumindest einen Freischaltungsinformation in dem Speicher.

## Claims

1. Method for operating a management system comprising
at least one manager (OMC) and a plurality of agents (NE1, NE2, NE3), in which an external unit provides the manager (OMC) with information items (VOUCHER) which comprise a plurality of triggering information items, the triggering information items are stored in a memory of the manager (OMC),
at least one of the triggering information items is sent by the manager (OMC) to one of one of the agents (NE1, NE2, NE3), whereupon the at least one of the triggering information items effects in that one of the agents(NE1, NE2, NE3) the triggering of at least one hardware unit (HW1, HW2, HW3, HW4),
the at least one of the triggering information items is erased or marked in the memory of the manager (OMC), **characterized in that** each of the triggering information items for triggering a certain type of hardware unit (HW1, HW2, HW3) can be used in any one of the plurality of agents (NE1, NE2, NE3).

2. Method according to Claim 1, in which the information items (VOUCHER) are provided to the manager (OMC) encrypted and are decrypted by the manager (OMC) before being stored,
wherein, for the decryption, a quantity which unambiguously identifies the manager (OMC) and cannot be modified by the manager (OMC) is interrogated.

3. Method according to Claim 1 or 2, in which the erasing or marking occurs automatically
• after the reception by the manager (OMC) of a message, coming from that one of the agents (NE1, NE2, NE3), relating to the completed triggering,
or
after the sending out of the at least one of the triggering information items by the manager (OMC).

4. Method according to one of Claims 1 to 3, in which, due to the erasing or marking, the at least one of the triggering information items loses its capability of being able to trigger at least one hardware unit (HW1, HW2, HW3, HW4).

5. Method according to one of Claims 1 to 4, in which the information items (VOUCHER) comprise triggering information items for various types of hardware units (HW1, HW2, HW3, HW4).

6. Method according to one of Claims 1 to 5, in which the triggering information items are stored in such a manner that the triggering information items can neither be copied nor modified by the manager (OMC).

7. Method according to one of Claims 1 to 6, in which the manager (OMC), before sending out the at least one of the triggering information items, receives information items relating to at least one triggerable hardware unit (HW1, HW2, HW3, HW4) of that one of the agents (NE1, NE2, NE3) .

8. Method according to one of Claims 1 to 7, in which at least one of the further triggering information items is sent by the manager (OMC) to a further one of the agents (NE1, NE2, NE3), whereupon the at least one of the further triggering information items effects the further triggering of at least one hardware unit (HW1, HW2, HW3, HW4) in the further one of the agents (NE1, NE2, NE3).

9. Method according to one of Claims 1 to 8, in which the at least one of the triggering information items effects a temporary triggering of at least one hardware unit (HW1, HW2, HW3, HW4) in the agent (NE1, NE2, NE3).

10. Manager (OMC) for a management system comprising at least the manager (OMC) and a plurality of agents (NE1, NE2, NE3),
comprising
means for receiving information items (VOUCHER) from an external unit, which information items (VOUCHER) comprise a plurality of triggering information items,
means for storing the plurality of triggering information items in a memory, wherein each of the triggering information items can effect the triggering of at least one hardware unit (HW1, HW2, HW3, HW4) of a certain type of hardware unit in any one of the agents (NE1, NE2, NE3),
means for sending out at least one of the triggering information items to that one of the agents (NE1, NE2, NE3),
means for erasing or marking the at least one of the triggering information items in the memory.

11. Computer program product for a management system comprising at least one manager (OMC) and a plurality of agents (NE1, NE2, NE3), comprising
means for receiving information items (VOUCHER) from an external unit, which information items (VOUCHER) comprise a plurality of triggering information items,
means for storing the plurality of triggering information items in a memory of the manager (OMC),
means for triggering at least one hardware unit (HW1, HW2, HW3, HW4) of a certain type of hardware unit of any one of the agents (NE1, NE2, NE3) after reception of at least one of the triggering information items sent by the manager (OMC),
means for erasing or marking the at least one triggering information item in the memory.

## Revendications

1. Procédé d'exploitation d'un système de gestion comprenant au moins un gestionnaire (OMC) et plusieurs agents (NE1, NE2, NE3), dans lequel
des informations sont fournies au gestionnaire (OMC) par unité externe (VOUCHER), lesquelles comprennent une pluralité d'informations d'activation,
une mémorisation des informations d'activation est effectuée dans une mémoire du gestionnaire (OMC),
au moins une des informations d'activation est envoyée par le gestionnaire (OMC) à l'un des agents (NE1, NE2, NE3), après quoi l'au moins une des informations d'activation induit dans l'un des agents (NE1, NE2, NE3) l'activation d'au moins une unité matérielle (HW1, HW2, HW3, HW4),
une suppression ou un marquage de l'au moins une des informations d'activation étant effectué(e) dans la mémoire du gestionnaire (OMC),
**caractérisé en ce que**
chacune des informations d'activation peut être utilisée pour l'activation d'un type déterminé d'unité matérielle (HW1, HW2, HW3) dans l'un quelconque de la pluralité d'agents (NE1, NE2, NE3).

2. Procédé selon la revendication 1, dans lequel
les informations (VOUCHER) sont fournies de manière cryptée au gestionnaire (OMC) et sont décryptées par le gestionnaire (OMC) avant d'être mémorisées,
une donnée identifiant le gestionnaire (OMC) de manière unique et non modifiable par le gestionnaire (OMC) étant interrogée pour effectuer le décryptage.

3. Procédé selon la revendication 1 ou 2, dans lequel la suppression ou le marquage est effectué(e) automatiquement
• après la réception, par le gestionnaire (OMC), d'un message provenant de l'un des agents (NE1, NE2, NE3) et concernant l'activation effectuée,
ou
• après l'envoi de l'au moins une des informations d'activation par le gestionnaire (OMC).

4. Procédé selon l'une des revendications 1 à 3, dans lequel, en raison de la suppression ou du marquage, l'au moins une des informations d'activation perd la possibilité d'activer au moins une unité matérielle (HW1, HW2, HW3, HW4).

5. Procédé selon l'une des revendications 1 à 4, dans lequel les informations (VOUCHER) comprennent des informations d'activation de différents types d'unités matérielles (HW1, HW2, HW3, HW4).

6. Procédé selon l'une des revendications 1 à 5, dans lequel la mémorisation des informations d'activation est effectué(e) de telle sorte que les informations d'activation ne puissent être ni copiées ni modifiées par le gestionnaire (OMC).

7. Procédé selon l'une des revendications 1 à 6, dans lequel, avant d'envoyer l'au moins une des informations d'activation, le gestionnaire (OMC) reçoit des informations concernant au moins une unité matérielle activable (HW1, HW2, HW3, HW4) de l'un des agents (NE1, NE2, NE3).

8. Procédé selon l'une des revendications 1 à 7, dans lequel au moins une autre des informations d'activation est envoyée par le gestionnaire (OMC) à un autre des agents (NE1, NE2, NE3), après quoi l'au moins une autre des informations d'activation dans l'autre des agents (NE1, NE2, NE3) effectue l'activation d'au moins une unité matérielle (HW1, HW2, HW3, HW4).

9. Procédé selon l'une des revendications 1 à 8, dans lequel l'au moins une des informations d'activation induit dans l'agent (NE1, NE2, NE3) une activation temporaire d'au moins une unité matérielle (HW1, HW2, HW3, HW4).

10. Gestionnaire (OMC), destiné à un système de gestion comprenant au moins le gestionnaire (OMC) et une pluralité d'agents (NE1, NE2, NE3), comprenant
des moyens destinés à recevoir des informations (VOUCHER) d'une unité externe, lesquelles informations (VOUCHER) comprennent une pluralité d'informations d'activation,
des moyens destinés à mémoriser la pluralité d'informations d'activation dans une mémoire, chacune des informations d'activation pouvant induire dans l'un quelconque des agents (NE1, NE2, NE3) l'activation d'au moins une unité matérielle (HW1, HW2, HW3, HW4) d'un type déterminé d'unité matérielle,
des moyens destinés à envoyer au moins une des informations d'activation à l'un des agents (NE1, NE2, NE3),
des moyens destinés à supprimer ou marquer l'au moins une des informations d'activation dans la mémoire.

11. Logiciel, destiné à un système de gestion comprenant au moins un gestionnaire (OMC) et une pluralité d'agents (NE1, NE2, NE3), comprenant
des moyens destinés à recevoir des informations (VOUCHER) d'une unité externe, lesquelles informations (VOUCHER) comprennent une pluralité d'informations d'activation,
des moyens destinés à mémoriser la pluralité d'informations d'activation dans une mémoire du gestionnaire (OMC),
des moyens destinés à activer au moins une unité matérielle (HW1, HW2, HW3, HW4) d'un type déterminé d'unité matérielle de l'un quelconque des agents (NE1, NE2, NE3) après la réception d'au moins une des informations d'activation envoyées par le gestionnaire (OMC),
des moyens destinés à supprimer ou marquer l'au moins une information d'activation dans la mémoire.
